# EUROPEAN PATENT APPLICATION

(11) **EP 4 520 695 A1**
(43) Date of publication of application: **12.03.2025**
(21) Application number: 23864417.3
(22) Date of filing: 27.06.2023
(51) Int. Cl.: B65H 18/02, B65H 19/30

(54) **WINDING AND UNWINDING SYSTEM, CONTROL METHOD, AND PREPARATION DEVICE FOR BATTERY ELECTRODE SHEET**

(30) Priority: 15.09.2022 CN 202211124550
(71) Applicant: Contemporary Amperex Technology Co., Limited, Ningde, Fujian 352100 (CN)
(72) Inventor: LUO, Yu, Ningde, Fujian 352100 (CN); WU, Kun, Ningde, Fujian 352100 (CN); XIAO, Qiuhua, Ningde, Fujian 352100 (CN)
(74) Representative: Ran, Handong
(86) International application number: PCT/CN2023/102736
(87) International publication number: WO 2024/055678

(57) **Abstract**

A winding and unwinding system (100), comprising at least two winding rollers (120), a roll changing device (130), a sensing device (150), a measuring device (140), and a controller. The roll changing device (130) can drive the at least two winding rollers (120) to sequentially move to a set position, and the winding roller (120) located at the set position can wind a strip material; the sensing device (150) sends an in-place signal when the winding roller (120) located at the set position rotates by one circle; the measuring device (140) is used for measuring the running length of the strip material; when receiving the in-place signal, the controller determines, according to the running length measured by the measuring device (140), the winding diameter of the winding roller (120) located at the set position; when the winding diameter reaches a preset threshold, the controller controls the roll changing device (130) to drive the other winding roller (120) to move to the set position and come into contact with the strip material, so that the strip material is wound to the other winding roller (120). Thus, an ultrasonic ranging sensor is removed, the mode of measuring the winding diameter is independent of the thickness of the strip material, and the measuring accuracy is high. Further comprised are a control method for the winding and unwinding system (100), and a preparation device for a battery electrode sheet.

## Description

### CROSS-REFERENCE TO RELATED APPLICATIONS

This application refers to Chinese Patent Application No. 202211124550.5, filed on September 15, 2022 and entitled "WINDING AND UNWINDING SYSTEM, CONTROL METHOD, AND PREPARATION DEVICE FOR BATTERY ELECTRODE SHEET", which is incorporated herein by reference in its entirety.

### TECHNICAL FIELD

This application relates to the field of battery technologies, and in particular, to a winding and unwinding system, a control method, and a preparation device for a battery electrode sheet.

### BACKGROUND

Energy saving and emission reduction are crucial to the sustainable development of the automobile industry. Electric vehicles, with their advantages in energy conservation and emission reduction, have become an important part of sustainable development of the automobile industry. For electric vehicles, battery technology is an important factor in connection with their development.

During the winding of battery electrode sheets, to implement taper tension control, it is necessary to detect the winding radius to adjust the tension based on the winding radius. However, the measurement accuracy of common winding radius measurement methods is low.

### SUMMARY

This application is intended to resolve at least one of the foregoing technical problems in the prior art. In view of this, an objective of this application is to provide a winding and unwinding system, a control method, and a preparation device for a battery electrode sheet to improve the measurement accuracy of the winding radius.

Embodiments of a first aspect of this application provide a winding and unwinding system, including at least two winding rollers, a roll-changing device, a sensing device, a measuring device, and a controller. The roll-changing device is able to drive the at least two winding rollers to sequentially move to a set position, where a winding roller located at the set position is able to wind a strip material; the sensing device emits an in-place signal when the winding roller located at the set position rotates one circle; and the measuring device is configured to measure a traveling length of the strip material. The controller is connected to the sensing device, the measuring device, and the roll-changing device, where the controller, in response to receiving the in-place signal, determines a winding radius of the winding roller located at the set position based on the traveling length measured by the measuring device; and the controller sends a roll-changing signal to the roll-changing device when the winding radius reaches a preset threshold, where the roll-changing device, upon receiving the roll-changing signal, drives another winding roller to move to the set position and get in contact with the strip material, so that the strip material winds onto the another winding roller.

In the technical solution of the embodiments of this application, the current circumference of the winding roller can be determined by measuring the traveling length of the strip material when the winding roller rotates one circle, and the current winding radius of the winding roller can be obtained accordingly. This eliminates the need for an ultrasonic distance measuring sensor, not only saving costs but also providing high measurement accuracy, which helps avoid errors in estimating the number of winding layers due to measurement errors. Moreover, the method of measuring the winding radius in the winding and unwinding system of this embodiment is independent of thickness and tension of the strip material, and therefore is not affected by thickness of the electrode sheet and interlayer spacing of the electrode sheet, providing high measurement accuracy.

In some embodiments, the sensing device includes a light-emitting device and a receiving device, where the light-emitting device is configured to emit a photoelectric signal, and the receiving device is configured to receive the photoelectric signal, where when the winding roller located at the set position rotates one circle, a state of reception of the photoelectric signal by the receiving device changes and the receiving device emits the in-place signal. With this arrangement, the sensing device is a photoelectric switch, which has the advantage of high detection accuracy.

In some embodiments, the light-emitting device and the receiving device are fixed and are disposed opposite each other, and the winding roller located at the set position is provided with a light-blocking member, where the light-blocking member is able to rotate with the winding roller to a position between the light-emitting device and the receiving device and block the photoelectric signal. With this arrangement, the sensing device emits the in-place signal based on the rotation of the winding roller, cooperating with the controller for measurement.

In some embodiments, the sensing device is a slot-type photoelectric switch or a through-beam photoelectric switch. The slot-type sensing device provided as a slot-type photoelectric switch or a through-beam photoelectric switch is easy to obtain through purchase. The light-emitting device and the receiving device are integrated into a single component, eliminating the need for separate installations.

In some embodiments, the winding and unwinding system includes a traction mechanism, where the traction mechanism is located upstream of the winding roller in a conveying direction of the strip material to pull the strip material and convey it to the winding roller located at the set position. The traction mechanism can be configured to apply traction to the strip material to pull the strip material and convey it in a direction approaching the winding roller.

In some embodiments, the traction mechanism includes a traction motor, a driving traction roller, and a driven traction roller, where the driving traction roller is drivingly connected to the traction motor, and the strip material passes between the driving traction roller and the driven traction roller; and the measuring device determines the traveling length of the strip material by measuring a rotation angle or a rotation displacement of the driving traction roller or the driven traction roller.

In some embodiments, the measuring device is a meter wheel, and the meter wheel is in contact with a surface of the driving traction roller or the driven traction roller. In this embodiment, with the meter wheel provided as in contact with a surface of the driving traction roller or the driven traction roller to detect the rotation displacement of the driving traction roller or the driven traction roller, the traveling length of the strip material can be directly determined, eliminating the need for conversion and resulting in a small amount of calculation. Moreover, compared with the meter wheel being in contact with a surface of the strip material to measure the traveling length of the strip material, in this embodiment, the meter wheel is not in contact with the strip material, avoiding affecting the strip material due to contact between the meter wheel and the active material layer on the strip material.

It some embodiments, a driving device and a roll-changing pressing roller drivingly connected to the driving device is further included, where the driving device is connected to the controller; where the controller sends a roll-pressing signal to the driving device when the winding radius reaches the preset threshold, and the driving device, upon receiving the roll-pressing signal, drives the roll-changing pressing roller to move close to the set position, so that the roll-changing pressing roller gets in contact with the strip material. With this design, after the roll is changed, a new winding roller winds the strip material, and the roll-changing pressing roller can move to get in contact with the strip material to apply pressure to the strip material, ensuring that the strip material can wind onto the new winding roller.

In some embodiments, the driving device includes an oscillating arm and a servo motor, where one end of the oscillating arm is connected to the roll-changing pressing roller, and another end of the oscillating arm is drivingly connected to the servo motor, the servo motor being connected to the controller.

In some embodiments, the winding and unwinding system further includes an unwinding roller, where the unwinding roller is configured to unwind the strip material, and the unwinding roller is located upstream of the winding roller in the conveying direction of the strip material.

Compared with the winding radius measuring performed by using the ultrasonic distance measuring sensor, the winding and unwinding system of this embodiment has higher measurement accuracy, which helps avoid errors in estimating the number of layers of the strip material wound on the unwinding roller due to measurement errors, thereby avoiding waste caused by the unwinding roller automatically changing rolls prematurely.

Embodiments of a second aspect of this application provide a preparation device for a battery electrode sheet, which includes the winding and unwinding system provided in the embodiments of the first aspect of this application.

Embodiments of a third aspect of this application provide a winding and unwinding control method applicable to the winding and unwinding system provided in the embodiments of the first aspect of this application. The control method includes: obtaining an in-place signal; determining, in response to receiving the in-place signal, a winding radius of the winding roller located at the set position based on the traveling length measured by the measuring device; and sending a roll-changing signal to the roll-changing device when the winding radius reaches a preset threshold to control the roll-changing device to drive another winding roller to move to the set position and get in contact with the strip material, so that the strip material winds onto the another winding roller.

In some embodiments, after the determining a winding radius of the winding roller located at the set position based on the traveling length measured by the measuring device, the control method further includes: sending a roll-pressing signal to the driving device when the winding radius reaches the preset threshold to control the driving device to drive the roll-changing pressing roller to move close to the set position, so that the roll-changing pressing roller gets in contact with the strip material.

The foregoing description is merely an overview of the technical solution of this application. For a better understanding of the technical means in this application such that they can be implemented according to the content of the specification, and to make the above and other objectives, features and advantages of this application more obvious and easier to understand, the following describes specific embodiments of this application.

### BRIEF DESCRIPTION OF DRAWINGS

In the accompanying drawings, unless otherwise specified, same reference signs throughout a plurality of accompanying drawings indicate the same or similar components or elements. These accompanying drawings may not necessarily be drawn to scale. It should be understood that these accompanying drawings illustrate only some embodiments disclosed in this application and should not be construed as limitations on the scope of this application. To describe the technical solutions in the embodiments of this application more clearly, the following briefly describes the accompanying drawings required for describing the embodiments of this application. Apparently, the accompanying drawings in the following descriptions show merely some embodiments of this application, and persons of ordinary skill in the art may still derive other drawings from the accompanying drawings without creative efforts.
FIG. 1 is a schematic diagram of a winding and unwinding system in a related example;
FIG. 2 is a schematic diagram of another winding and unwinding system in a related example;
FIG. 3 is a schematic diagram of a winding and unwinding system in a first working state according to an embodiment of this application;
FIG. 4 is a schematic diagram of a winding and unwinding system in a second working state according to an embodiment of this application;
FIG. 5 is a schematic diagram of a winding and unwinding system in a third working state according to an embodiment of this application;
FIG. 6 is a schematic diagram of another winding and unwinding system in a first working state according to an embodiment of this application;
FIG. 7 is a schematic diagram of another winding and unwinding system in a second working state according to an embodiment of this application;
FIG. 8 is a schematic diagram of another winding and unwinding system in a third working state according to an embodiment of this application; and
FIG. 9 is a schematic flowchart of a winding and unwinding method according to an embodiment of this application.

Description of reference signs:
100-winding and unwinding system;
110-unwinding roller; 111-third motor;
120-winding roller;
130-roll-changing device; 131-base; 132-rod; 133-rotating plate;
140-measuring device; 141-fixed base; 142-connecting rod; 143-cylinder;
150-sensing device; 151-light-emitting device; 152-receiving device;
160-traction mechanism; 161-driving traction roller; 162-driven traction roller; 163-traction motor;
170-roll-changing pressing roller; 171-driving device; 1711-servo motor; 1712-oscillating arm; and
200-strip material.

### DESCRIPTION OF EMBODIMENTS

The following describes in detail the embodiments of technical solutions of this application with reference to the accompanying drawings. The following embodiments are merely intended for a clearer description of the technical solutions of this application and therefore are used as just examples which do not constitute any limitations on the protection scope of this application.

Unless otherwise defined, all technical and scientific terms used herein shall have the same meanings as commonly understood by those skilled in the art to which this application belongs. The terms used herein are merely intended to describe the specific embodiments but not intended to constitute any limitation on this application. The terms "include", "have", and any other variations thereof in the specification, the claims and the foregoing brief description of drawings of this application are intended to cover a non-exclusive inclusion.

In descriptions of embodiments of this application, the terms "first", "second" and the like are merely intended to distinguish between different objects, and shall not be understood as any indication or implication of relative importance or any implicit indication of the number, specific sequence or primary-secondary relationship of the technical features indicated. In the descriptions of this application, "a plurality of" means at least two unless otherwise specifically stated.

In this specification, reference to "embodiment" means that specific features, structures or characteristics described with reference to the embodiment may be incorporated in at least one embodiment of this application. The word "embodiment" appearing in various places in the specification does not necessarily refer to the same embodiment or an independent or alternative embodiment that is exclusive of other embodiments. Persons skilled in the art explicitly and implicitly understand that the embodiments described herein may be combined with other embodiments.

In the descriptions of the embodiments of this application, the term "and/or" is only an associative relationship for describing associated objects, indicating that three relationships may be present. For example, A and/or B may indicate the following three cases: presence of only A, presence of both A and B, and presence of only B. In addition, the character "/" in this specification generally indicates an "or" relationship between contextually associated objects.

In the description of the embodiments of this application, the term "a plurality of" means more than two (inclusive). Similarly, "a plurality of groups" means more than two (inclusive) groups, and "a plurality of pieces" means more than two (inclusive) pieces.

In the description of the embodiments of this application, the orientations or positional relationships indicated by the technical terms "center", "longitudinal", "transverse", "length", "width", "thickness", "upper", "lower", "front", "rear", "left", "right", "vertical", "horizontal", "top", "bottom", "inside", "outside", "clockwise", "counterclockwise", "axial", " radial", "circumferential", and the like are based on the orientations or positional relationships as shown in the accompanying drawings. These terms are merely for ease and brevity of description of the embodiments of this application rather than indicating or implying that the means or components mentioned must have specific orientations or must be constructed or manipulated according to specific orientations, and therefore shall not be construed as any limitations on the embodiments of this application.

In the descriptions of the embodiments of this application, unless otherwise specified and defined explicitly, the technical terms "mount", "connect", "join", and "fix" should be understood in their general senses. For example, they may refer to a fixed connection, a detachable connection, or an integral connection, may refer to a mechanical connection or an electrical connection, and may refer to a direct connection, an indirect connection via an intermediate medium, an internal communication between two elements, or an interaction between two elements. Persons of ordinary skill in the art can understand specific meanings of these terms in this application as appropriate to specific situations.

Batteries are widely used in energy storage power systems, electric transportation tools, military equipment, and aerospace. A battery mainly includes electrode assemblies. An electrode assembly, which serves as a storage component, is mainly composed of a positive electrode sheet, a negative electrode sheet, and a separator. Operation of the battery mainly relies on migration of metal ions between the positive electrode sheet and the negative electrode sheet. Both the positive electrode sheet and the negative electrode sheet include a current collector and an active material layer, where the active material layer is applied on a surface of the current collector. The production process of the electrode sheets typically involves: using a coating device to apply an active material layer onto an electrode sheet. The electrode sheet coated with the active material layer is then conveyed to a roller pressing device, where the roller pressing device presses the electrode sheet to compact the current collector and the active material layer. After that, the electrode sheet is further conveyed to the winding roller for winding.

When winding is performed with constant tension, as the winding radius increases, the outer layers of the electrode sheet tend to slip and slide axially along the winding roller, while the inner layers close to the winding roller are prone to wrinkling. To solve this problem, taper tension control is usually required during winding, which means adjusting the tension based on a change in the winding radius and decreasing the tension as the winding radius increases. Therefore, it is necessary to measure the winding radius.

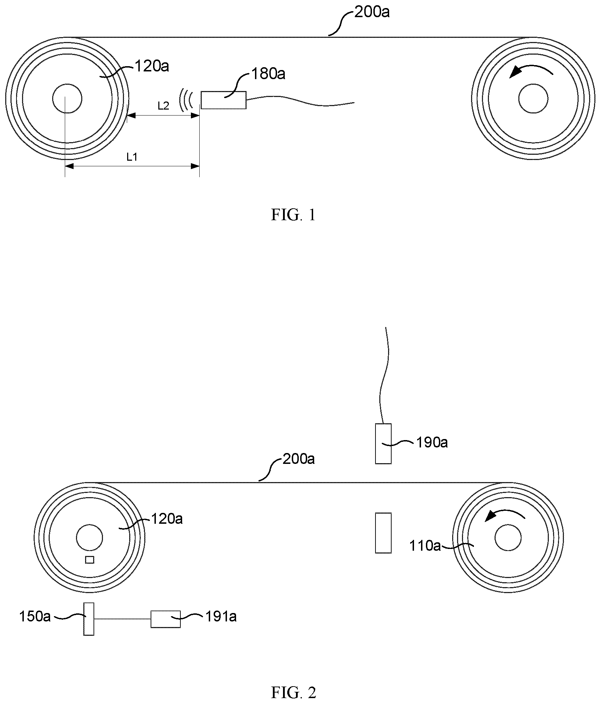

FIG. 1 is a schematic diagram of a winding and unwinding system in a related example. In some examples, as shown in FIG. 1, an ultrasonic distance measuring sensor 180a may be used to directly detect the winding radius. The working principle of measuring the winding radius in this example is as follows: a distance between the ultrasonic distance measuring sensor 180a and the center of the winding roller 120a is a fixed value L1. The ultrasonic distance measuring sensor 180a can detect a distance L2 between itself and the winding roller 120a, so the winding radius is L1 - L2. However, there are the following problems with using the ultrasonic distance measuring sensor 180a to detect the winding radius: first, the cost of the ultrasonic distance measuring sensor 180a is high; second, a detection accuracy of the ultrasonic distance measuring sensor 180a is ±0.5 mm; however, thickness of the electrode sheet 200a is usually 4-6 micrometers (µm). Thus, when there is a detection error of, for example, -0.5 millimeters (mm) in the detection performed by the ultrasonic distance measuring sensor 180a, the theoretical number of layers of the electrode sheet 200a wound on the winding roller 120a calculated based on this is far greater than the actual number of layers of the electrode sheet 200a wound on the winding roller 120a, leading to an error in estimating the number of layers of the electrode sheet 200a wound on the winding roller 120a. When a diameter of the winding roller 120a is equal to a diameter of the unwinding roller, the number of layers of the electrode sheet 200a wound on the winding roller 120a is equal to the number of layers of the electrode sheet 200a unwound from the unwinding roller. Accordingly, the theoretical number of layers of the electrode sheet 200a unwound from the unwinding roller calculated is far greater than the actual number of layers of the electrode sheet 200a unwound from the unwinding roller, leading to an error in estimating the actual number of layers of the electrode sheet 200a unwound from the unwinding roller, and when causing the unwinding roller to automatically change rolls prematurely, this results in waste.

FIG. 2 is a schematic diagram of another winding and unwinding system in a related example. In other examples, as shown in FIG. 2, the winding and unwinding system 100a includes an unwinding roller 110a, a winding roller 120a, a thickness measuring device 190a, a proximity switch 150a, and a counter 191a. The unwinding roller 110a is configured to unwind the electrode sheet 200a. The winding roller 120a is configured to wind the electrode sheet 200a. In the conveying direction of the electrode sheet 200a, the thickness measuring device 190a is located downstream of the unwinding roller 110a and is configured to measure the thickness h of the electrode sheet 200a. The proximity switch 150a is configured to emit a signal to the counter 191a when the unwinding roller 110a winds one circle, and the counter 191a counts in response to receiving the signal. Taking the diameter of the winding roller 120a being equal to the diameter of the unwinding roller 110a as an example, the working principle of measuring the winding radius in this example is as follows: each time the unwinding roller 110a rotates one circle, the unwinding radius decreases by 2h. The initial diameter of the unwinding roller 110a is D0, and when the unwinding roller 110a rotates N circles, the unwinding radius R = (D0 - 2hN)/2. Accordingly, the winding radius r = (D0 + 2hN)/2. However, due to the precision limitations of the roller pressing device and the limitations of the coating process, the thickness of the electrode sheet 200a is uneven. Therefore, when this method is used to detect the winding radius, the thickness of the electrode sheet 200a affects the accuracy of the winding radius calculation.

In view of this, the applicant proposes a winding and unwinding system. This winding and unwinding system uses a measuring device to measure the traveling length of the strip material when the winding roller rotates one circle. From this, the circumference of the winding roller for one circle of rotation can be determined, thereby allowing the calculation of the winding radius of the winding roller.

The winding and unwinding system disclosed in the embodiments of this application can be applied to winding various types of strip materials. For example, the strip materials may refer to battery electrode sheets, specifically, the strip materials may be positive electrode sheets or negative electrode sheets; or the strip materials may also refer to steel strips, adhesive tapes, cloth tapes, or paper tapes. This is not specifically limited in this embodiment of this application. When the strip material is an electrode sheet, the strip material specifically includes a metal foil (such as copper foil or aluminum foil) and an active material layer. In this case, the winding and unwinding system may specifically be used for the die-cutting process of the electrode sheet.

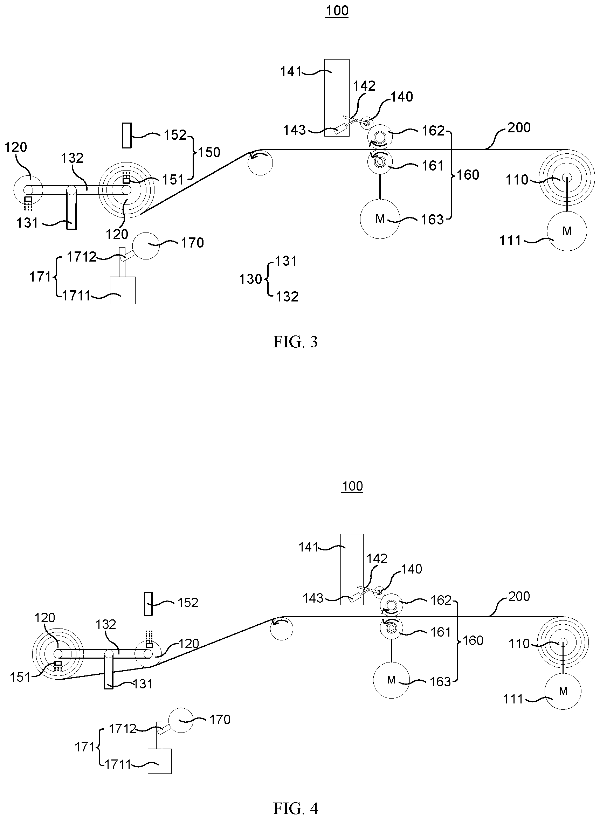

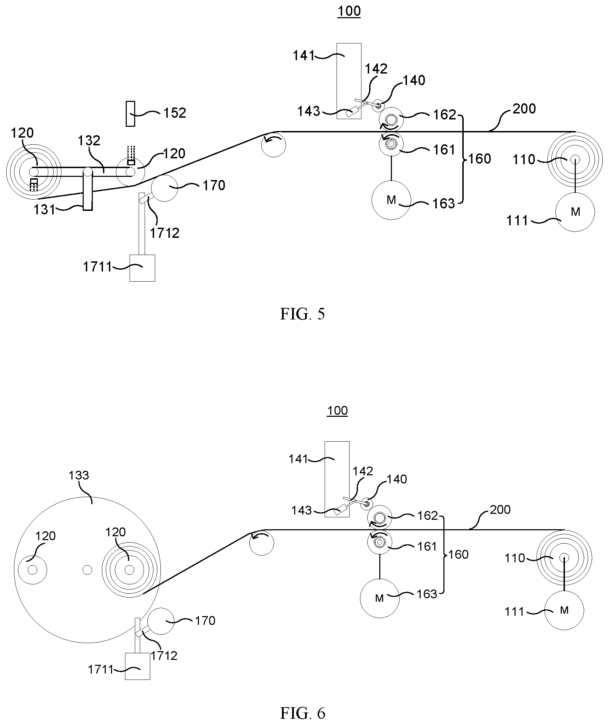

FIG. 3 is a schematic diagram of a winding and unwinding system in a first working state according to an embodiment of this application. FIG. 4 is a schematic diagram of a winding and unwinding system in a second working state according to an embodiment of this application. FIG. 5 is a schematic diagram of a winding and unwinding system in a third working state according to an embodiment of this application. Referring to FIG. 3 to FIG. 5, according to some embodiments of this application, the winding and unwinding system 100 includes at least two winding rollers 120, a roll-changing device 130, a sensing device 150, a measuring device 140, and a controller. The roll-changing device 130 is able to drive at least two winding rollers 120 to sequentially move to a set position, where a winding roller 120 located at the set position is able to wind a strip material 200. The sensing device 150 emits an in-place signal when the winding roller 120 located at the set position rotates one circle. The measuring device 140 is configured to measure a traveling length of the strip material 200.

The controller is connected to the sensing device 150, the measuring device 140, and the roll-changing device 130, where the controller, in response to receiving the in-place signal, determines a winding radius of the winding roller 120 located at the set position based on the traveling length measured by the measuring device 140; and the controller sends a roll-changing signal to the roll-changing device 130 when the winding radius reaches a preset threshold, where the roll-changing device 130, upon receiving the roll-changing signal, drives another winding roller 120 to move to the set position and get in contact with the strip material 200, so that the strip material 200 winds onto the another winding roller 120.

The winding and unwinding system 100 may include a first motor and a second motor. The first motor is configured to drive the winding roller 120 located at the set position to rotate, and the strip material 200 winds onto the winding roller 120 with the rotation of the winding roller 120.

The working principle of measuring the winding radius in this embodiment is as follows: when the winding roller 120 located at the set position rotates one circle, the sensing device 150 emits an in-place signal. At this time, the controller determines that the traveling length measured by the measuring device 140 is the current circumference C of the winding roller 120. According to the circumference calculation formula C = 2πr, the current winding radius r of the winding roller 120 can be obtained. The winding radius r refers to radius of a winding roller.

The winding radius r being determined as having reached the preset threshold can be used to characterize the situation that the winding radius r is approaching or reaching the maximum roll radius. At this time, the winding and unwinding system 100 can automatically change the roll of the winding roller 120. The roll changing principle is as follows: the controller sends a roll-changing signal to the roll-changing device 130, and the roll-changing device 130, upon receiving the roll-changing signal, drives another winding roller 120 to move to the set position and get in contact with the strip material 200. The second motor is configured to drive the another winding roller 120, which has moved to the set position, to rotate. The strip material 200 winds onto the another winding roller 120 with the rotation of the another winding roller 120.

Taking a situation where two winding rollers 120 are provided as an example, the roll-changing device 130, for example, may include a base 131 and a rod 132, as shown in FIG. 3 to FIG. 5. The base 131 is mounted on the ground, and the rod 132 is rotatably mounted on the base 131. The two winding rollers 120 are connected to two ends of the rod 132, respectively. When the winding and unwinding system 100 is in the first working state, one of the winding rollers 120 is located in the set position, and the rod 132 of the roll-changing device 130 rotates upon receiving the roll-changing signal, so that the other winding roller 120 moves to the set position.

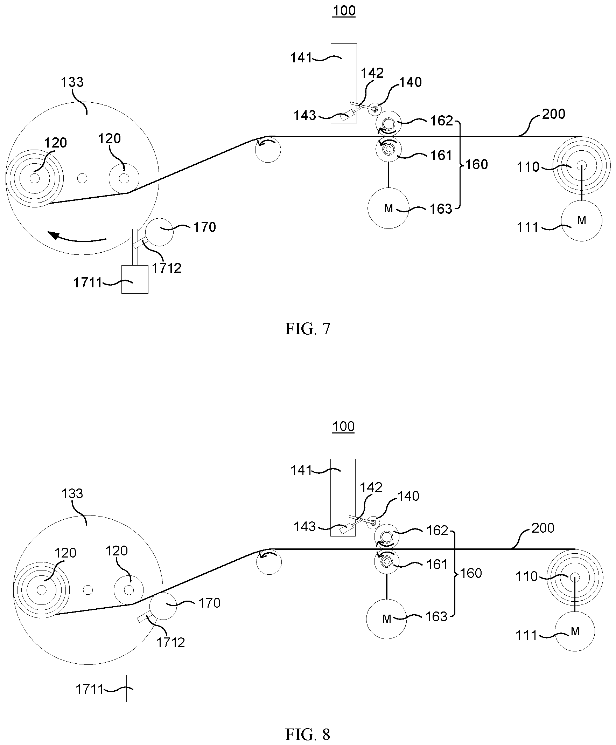

FIG. 6 is a schematic diagram of another winding and unwinding system 100 in a first working state according to an embodiment of this application. FIG. 7 is a schematic diagram of another winding and unwinding system 100 in a second working state according to an embodiment of this application. FIG. 8 is a schematic diagram of another winding and unwinding system 100 in a third working state according to an embodiment of this application. Alternatively, in another embodiment, as shown in FIG. 6 to FIG. 8, the roll-changing device 130 may further include a rotating plate 133. One end of each of the two winding rollers 120 is connected to the rotating plate 133. The rotating plate 133 changes the positions of the two winding rollers 120 through rotation, so that the two winding rollers 120 can sequentially move to the set position.

In summary, the winding and unwinding system 100 of this embodiment can determine the current circumference of the winding roller 120 by measuring the traveling length of the strip material 200 for one circle of rotation of the winding roller 120, thereby obtaining the current winding radius of the winding roller 120. This eliminates the need for an ultrasonic distance measuring sensor, not only saving costs but also providing high measurement accuracy, which helps avoid errors in estimating the number of winding layers due to measurement errors. Moreover, the method of measuring the winding radius in the winding and unwinding system 100 of this embodiment is independent of thickness and tension of the strip material 200, and therefore is not affected by thickness of the electrode sheet and interlayer spacing of the electrode sheet, providing high measurement accuracy.

In addition, the winding and unwinding system 100 is also designed to automatically change the winding roller 120, when the winding radius reaches a preset threshold, by controlling the roll-changing device 130. This allows a new winding roller 120 to move to the set position to wind the strip material 200, and the strip material 200 automatically winds onto the winding roller 120. The winding and unwinding system 100 can then start measuring the winding radius of the new winding roller 120, optimizing the roll-changing process and improving production efficiency.

According to some embodiments of this application, the sensing device 150 may include a light-emitting device 151 and a receiving device 152, where the light-emitting device 151 is configured to emit a photoelectric signal, and the receiving device 152 is configured to receive the photoelectric signal, where when the winding roller 120 located at the set position rotates one circle, a state of reception of the photoelectric signal by the receiving device 152 changes and the receiving device emits the in-place signal.

For example, as shown in FIG. 3 to FIG. 5, the light-emitting device 151 may be mounted at one end of the winding roller 120 along a rotation axis, and rotate synchronously with the winding roller 120 under the driving of the winding roller 120. Each time the winding roller 120 rotates one circle, the photoelectric signal emitted by the light-emitting device 151 changes from not entering the receiving device 152 to entering the receiving device 152. The receiving device 152 emits an in-place signal when its state of reception of the photoelectric signal changes from a non-receiving state to a receiving state. With this arrangement, the sensing device 150 is a photoelectric switch, which has the advantage of high detection accuracy.

According to some other embodiments of this application, the receiving device 152 may also be configured to emit an in-place signal when its state of reception of the photoelectric signal changes from a receiving state to a non-receiving state. For example, the light-emitting device 151 and the receiving device 152 are fixed and disposed opposite each other, and the winding roller 120 located at the set position is mounted with a light-blocking member, where the light-blocking member is able to rotate with the winding roller 120 to a position between the light-emitting device 151 and the receiving device 152 and block the photoelectric signal.

The light-blocking member may be mounted at one end of the winding roller 120 along the rotation axis, and rotate synchronously with the winding roller 120 under the driving of the winding roller 120. After the light-blocking member rotates one circle with the winding roller 120, the light-blocking member rotates to a position between the light-emitting device 151 and the receiving device 152 and blocks the photoelectric signal. The state of reception of the photoelectric signal by the receiving device 152 changes from the receiving state to the non-receiving state. The light-emitting device 151 and the receiving device 152 may be separate components. With this arrangement, the sensing device 150 emits the in-place signal based on the rotation of the winding roller 120, cooperating with the controller for measurement.

According to some other embodiments of this application, the sensing device 150 is a slot-type photoelectric switch or a through-beam photoelectric switch. The slot-type photoelectric switch has the advantages of low cost, fast response, and small space occupation.

When the slot-type sensing device 150 is provided as a slot-type photoelectric switch or a through-beam photoelectric switch, the switch is easy to obtain through purchase. In addition, the light-emitting device 151 and the receiving device are 152 integrated into a single component, eliminating the need for separate installations. Of course, in other embodiments of this application, the sensing device 150 may also be replaced with a Hall effect proximity switch or the like.

According to some other embodiments of this application, still referring to FIG. 5, the winding and unwinding system 100 further includes a traction mechanism 160, where the traction mechanism 160 is located upstream of the winding roller 120 in a conveying direction of the strip material 200, to pull the strip material 200 and convey it to the winding roller 120 located at the set position With the provision of the traction mechanism 160, where the traction mechanism 160 is configured to apply traction to the strip material 200, the strip material 200 is pulled and conveyed in a direction approaching the winding roller 120.

According to some other embodiments of this application, when the winding and unwinding system 100 includes the technical solution of the traction mechanism 160, the traction mechanism 160 may specifically include a traction motor 163, a driving traction roller 161, and a driven traction roller 162, where the driving traction roller 161 is drivingly connected to the traction motor 163, and the strip material 200 passes between the driving traction roller 161 and the driven traction roller 162. The measuring device 140 can determine the traveling length of the strip material 200 by measuring a rotation angle or a rotation displacement of the driving traction roller 161 or the driven traction roller 162.

It should be understood that, when the diameters of the driving traction roller 161 and the driven traction roller 162 are the same, the rotation displacement of the driving traction roller 161 and the driven traction roller 162 is the traveling length of the strip material 200. For example, when the driving traction roller 161 and the driven traction roller 162 rotate one circle, the traveling length of the strip material 200 is the circumference of the driving traction roller 161 and the driven traction roller 162.

The measuring device 140 can directly measure the rotation displacement of the driving traction roller 161 or the driven traction roller 162, or can determine the rotation displacement by measuring a rotation angle of the driving traction roller 161 or the driven traction roller 162, and then determining the rotation displacement based on the rotation angle. For example, the measuring device 140 may be a rotary encoder, where the rotary encoder is provided on the driving traction roller 161 or the driven traction roller 162 to detect the rotation angle of the traction roller; or the measuring device 140 may also be an angle sensor.

In some embodiments, the measuring device 140 may also be provided on the traction motor 163. The measuring device 140 is configured to obtain the number of pulses of the traction motor 163. Based on the number of pulses, the rotation angle of the traction motor 163 can be determined. Based on the transmission ratio between the traction motor 163 and the driving traction roller 161, the rotation angle of the driving traction roller 161 can be determined.

According to some other embodiments of this application, the measuring device 140 is a meter wheel, and the meter wheel is in contact with a surface of the driving traction roller 161 or the driven traction roller 162.

The winding and unwinding system 100 may further include a fixed base 141, a connecting rod 142, and a cylinder 143. One end of the connecting rod 142 is connected to the fixed base 141, and another end of the connecting rod 142 is connected to the meter wheel. The cylinder 143 is fixedly mounted on the fixed base 141, and the telescopic rod of the cylinder 143 is connected to the connecting rod 142. The telescopic rod of the cylinder 143 extends and retracts to drive the connecting rod 142 to move, so that the meter wheel can abut against the driving traction roller 161 or the driven traction roller 162.

As shown in FIG. 4, taking the meter wheel in contact with the surface of the driven traction roller 162 as an example, the principle by which the measuring device 140 measures the traveling length of the strip material 200 is as follows: the driven traction roller 162 rotates to pull the strip material 200 to move, and the meter wheel rotates with the rotation of the driven traction roller 162, detecting the rotation displacement of the driven traction roller 162. Based on this, the traveling length of the strip material 200 can be directly determined.

In this embodiment, with the meter wheel provided as in contact with a surface of the driving traction roller 161 or the driven traction roller 162 to detect the rotation displacement of the driving traction roller 161 or the driven traction roller 162, the traveling length of the strip material 200 can be directly determined, eliminating the need for conversion and resulting in a small amount of calculation.

Moreover, compared with the meter wheel being in contact with a surface of the strip material 200 to measure the traveling length of the strip material 200, in this embodiment, the meter wheel is not in contact with the strip material 200, avoiding affecting the strip material 200 due to contact between the meter wheel and the active material layer on the strip material 200. It should also be noted that, compared with the meter wheel abutting against the winding roller 120 located at the set position, the arrangement of the meter wheel abutting against the surface of the driving traction roller 161 or the driven traction roller 162 prevents the meter wheel from affecting the winding of the strip material 200 by the winding roller 120.

According to some embodiments of this application, still referring to FIG. 3, the winding and unwinding system 100 may further include a driving device 171 and a roll-changing pressing roller 170, where the roll-changing pressing roller 170 is drivingly connected to the driving device 171, and the driving device 171 is connected to the controller. The controller sends a roll-pressing signal to the driving device 171 when the winding radius reaches the preset threshold, and the driving device 171, upon receiving the roll-pressing signal, drives the roll-changing pressing roller 170 to move close to the set position, so that the roll-changing pressing roller 170 gets in contact with the strip material 200.

When the winding radius reaches the preset threshold, the controller is not limited to sending the roll-changing signal and the roll-pressing signal simultaneously. The controller can alternatively send the roll-changing signal first and then send the roll-pressing signal.

The circumferential surface of the winding roller 120 may further be provided with an adhesive layer. An example working principle of the winding and unwinding system 100 in this embodiment is as follows: the controller first sends the roll-changing signal to the roll-changing device 130 when the winding radius reaches the preset threshold. The roll-changing device 130, upon receiving the roll-changing signal, drives another winding roller 120 to move to the set position. The another winding roller 120 can get in contact with the strip material 200 and start winding. The controller then sends the roll-pressing signal to the driving device 171. The driving device 171, upon receiving the roll-pressing signal, drives the roll-changing pressing roller 170 to move close to the set position so that the roll-changing pressing roller 170 gets in contact with the strip material 200. The roll-changing pressing roller 170 applies pressure to the strip material 200, enabling a reliable connection between the strip material 200 and the adhesive layer to ensure that the strip material 200 can wind onto the winding roller 120.

With this design, after the roll is changed, the new winding roller 120 winds the strip material 200, and the roll-changing pressing roller 170 can move to get in contact with the strip material 200 to apply pressure to the strip material 200, ensuring that the strip material 200 can wind onto the new winding roller 120.

The driving device 171 may be configured to drive the roll-changing pressing roller 170 to move in the vertical direction. In this case, the driving device 171, upon receiving the roll-pressing signal, can drive the roll-changing pressing roller 170 to move up a preset height to get in contact with the strip material 200, and then the driving device 171 can stop driving the roll-changing pressing roller 170 to move up.

In related technologies, the roll-changing pressing roller 170 may be provided with a contact sensor. The driving mechanism stops when the contact sensor detects that the roll-changing pressing roller 170 is in contact with the strip material 200 to prevent the driving mechanism from continuing to drive the roll-changing pressing roller 170 upward, causing the roll-changing pressing roller 170 to collide with the winding roller 120. However, in this example, if the contact sensor fails, an accident of collision between the roll-changing pressing roller 170 and the winding roller 120 is likely to occur. In the winding and unwinding system 100 of this embodiment, the controller can control the driving mechanism to drive the roll-changing pressing roller 170 to move up a preset height based on the measured winding radius. When the roll-changing pressing roller 170 moves up the preset height, it just gets in contact with the strip material 200, which helps reduce the risk of interference between the roll-changing pressing roller 170 and the winding roller 120 and eliminates the need for a contact sensor, reducing hardware costs.

According to some embodiments of this application, the driving device 171 may be configured to include an oscillating arm 1712 and a servo motor 1711, where one end of the oscillating arm 1712 is connected to the roll-changing pressing roller 170, and another end of the oscillating arm 1712 is drivingly connected to the servo motor 1711, the servo motor 1711 being connected to the controller.

The servo motor 1711 can drive the oscillating arm 1712 to rotate, driving the roll-changing pressing roller 170 to rotate to a position close to the set position and get in contact with the strip material 200. In this embodiment, the controller can control the driving mechanism to drive the roll-changing pressing roller 170 to rotate by a preset angle based on the measured winding radius. When the roll-changing pressing roller 170 rotates by the preset angle, it just gets in contact with the strip material 200.

The winding and unwinding system 100 may further include a cutting device connected to the controller. When the strip material 200 winds onto another winding roller 120, the controller can send a cutting signal to the cutting device, and the cutting device, upon receiving the cutting signal, cuts off the strip material 200 wound between the two winding rollers 120. In this way, one winding roller 120 completes winding, and the another winding roller 120 starts winding the strip material 200.

Still referring to FIG. 3, the winding and unwinding system 100 may further include an unwinding roller 110, where the unwinding roller 110 is configured to unwind the strip material 200, and the unwinding roller 110 is located upstream of the winding roller 120 in the conveying direction of the strip material 200.

The winding and unwinding system 100 further includes a third motor 111, where the third motor 111 drives the unwinding roller 110 to rotate. The unwinding roller 110 rotates in a same direction as the winding roller 120, and the diameter of the unwinding roller 110 may be the same as or different from the diameter of the winding roller 120. An unwinding length of the unwinding roller 110 is a winding length of the winding roller 120. It should be noted that when the diameter of the unwinding roller 110 is the same as the diameter of the winding roller 120, the sensing device 150 may alternatively emit the in-place signal when the unwinding roller 110 rotates one circle.

The winding and unwinding system 100 of this embodiment can measure the traveling length of the strip material 200 when the winding roller 120 rotates one circle. Since the unwinding roller 110 rotates in a same direction as the winding roller 120, the current unwinding radius of the unwinding roller 110 can be measured, and further, the number of layers of the strip material 200 wound on the unwinding roller 110 can be calculated accordingly.

Compared with the winding radius measuring performed by using the ultrasonic distance measuring sensor, the winding and unwinding system 100 of this embodiment has higher measurement accuracy, which helps avoid errors in estimating the number of layers of the strip material 200 wound on the unwinding roller 110 due to measurement errors, thereby avoiding waste caused by the unwinding roller 110 automatically changing rolls prematurely.

The embodiments of this application further provide a preparation device for a battery electrode sheet, where the preparation device is configured to make battery electrode sheets and may include the winding and unwinding system 100 according to any one of the above embodiments. The preparation device can use the rolled electrode sheets and separators produced by the winding and unwinding system 100 for winding to prepare electrode assemblies.

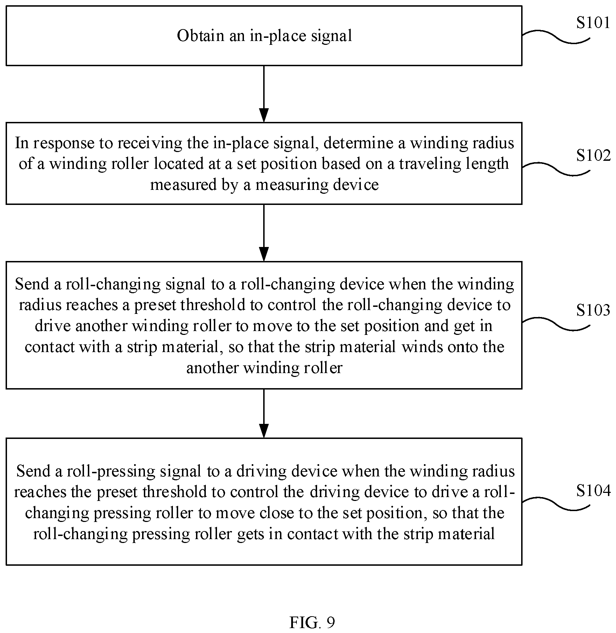

FIG. 9 is a schematic flowchart of a winding and unwinding method according to an embodiment of this application. Referring to FIG. 9, the embodiments of this application further provide a winding and unwinding control method, where the winding and unwinding control method is suitable for controlling the winding and unwinding system 100 according to any one of the above embodiments. The control method may include step S101 to step S103.

Step S101: Obtain an in-place signal.

Step S102: In response to receiving the in-place signal, determine a winding radius of the winding roller 120 located at the set position based on the traveling length measured by the measuring device 140.

Step S103: Send a roll-changing signal to the roll-changing device 130 when the winding radius reaches a preset threshold to control the roll-changing device 130 to drive another winding roller 120 to move to the set position and get in contact with the strip material 200, so that the strip material 200 winds onto the another winding roller 120.

Using this control method to control the winding and unwinding system 100, a current circumference of the winding roller 120 can be determined through measurement of a traveling length of the strip material 200 when the winding roller 120 rotates one circle, thereby the current winding radius of the winding roller 120 can be obtained. This eliminates the need for an ultrasonic distance measuring sensor, not only saving costs but also providing high measurement accuracy, which helps avoid errors in estimating the number of winding layers due to measurement errors. Moreover, the method of measuring the winding radius in the winding and unwinding system 100 of this embodiment is independent of thickness and tension of the strip material 200, and therefore is not affected by thickness of the electrode sheet and interlayer spacing of the electrode sheet, providing high measurement accuracy.

After the execution of step S102, as shown in FIG. 9, the control method may further include step S104.

Step S104: Send a roll-pressing signal to the driving device 171 when the winding radius reaches the preset threshold to control the driving device 171 to drive the roll-changing pressing roller 170 to move close to the set position, so that the roll-changing pressing roller 170 gets in contact with the strip material 200.

Here, the roll-pressing signal and the roll-changing signal may be sent simultaneously, or the roll-changing signal may be sent first, followed by the roll-pressing signal.

With this design, using this control method to control the winding and unwinding system 100 to automatically change the roll, the roll-changing pressing roller 170 can be controlled to move to get in contact with the strip material 200 to apply pressure to the strip material 200, ensuring that the strip material 200 can wind onto the new winding roller 120.

Additionally, after the execution of step S104, this control method may further include step S105.

Step S105: Send a cutting signal to the cutting device to control the cutting device to cut off the strip material 200 wound between the two winding rollers 120. In this way, automatic roll changing is implemented.

Referring to FIG. 3 and FIG. 4, in a specific embodiment, the winding and unwinding system 100 may include: at least two winding rollers 120, a roll-changing device 130, a light-emitting device, a receiving device, a meter wheel, a traction mechanism 160, and a controller. The traction mechanism 160 may specifically include a traction motor 163, a driving traction roller 161, and a driven traction roller 162. The driving traction roller 161 is drivingly connected to the traction motor 163, and the strip material 200 passes between the driving traction roller 161 and the driven traction roller 162. The meter wheel is in contact with the surface of the driven traction roller 162.

The roll-changing device 130 is able to drive at least two winding rollers 120 to sequentially move to a set position, where a winding roller 120 located at the set position is able to wind a strip material 200. Each winding roller 120 is provided with a light-blocking member at one end along the rotation axis. After the light-blocking member rotates one circle with the winding roller 120, the light-blocking member rotates to a position between the light-emitting device and the receiving device, blocking the photoelectric signal. The receiving device 152 emits an in-place signal to the controller. The controller determines the circumference of the winding roller 120 at the set position for one circle of rotation based on the traveling length of the strip material 200 measured by the meter wheel, thereby obtaining the winding radius of the winding roller 120 at the set position.

When the winding radius reaches the preset threshold, the controller sends a roll-changing signal to the roll-changing device 130. The roll-changing device 130, upon receiving the roll-changing signal, drives another winding roller 120 to move to the set position and get in contact with the strip material 200, so that the strip material 200 winds onto the another winding roller 120.

In conclusion, it should be noted that the above examples are merely intended for describing the technical solutions of this application but not for limiting this application. Although this application is described in detail with reference to the foregoing examples, persons of ordinary skill in the art should understand that they may still make modifications to the technical solutions described in the foregoing examples or make equivalent replacements to some or all technical features thereof without departing from the scope of the technical solutions of the examples of this application. They should all be covered in the scope of claims and summary in this application. In particular, as long as there is no structural conflict, the various technical features mentioned in the embodiments can be combined in any manner. This application is not limited to the specific embodiments disclosed in this specification but includes all technical solutions falling within the scope of the claims.

## Claims

1. A winding and unwinding system, comprising:
at least two winding rollers;
a roll-changing device, being able to drive the at least two winding rollers to sequentially move to a set position, wherein a winding roller located at the set position is able to wind a strip material;
a sensing device, emitting an in-place signal when the winding roller located at the set position rotates one circle;
a measuring device, configured to measure a traveling length of the strip material; and
a controller, connected to the sensing device, the measuring device, and the roll-changing device, wherein
the controller is configured to, in response to receiving the in-place signal, determine a winding radius of the winding roller located at the set position based on the traveling length measured by the measuring device, and send a roll-changing signal to the roll-changing device when the winding radius reaches a preset threshold,
the roll-changing device is configured to, upon receiving the roll-changing signal, drive another winding roller to move to the set position and get in contact with the strip material, so that the strip material winds onto the another winding roller.

2. The winding and unwinding system according to claim 1, wherein the sensing device comprises a light-emitting device and a receiving device, the light-emitting device is configured to emit a photoelectric signal, and the receiving device is configured to receive the photoelectric signal, and when the winding roller located at the set position rotates one circle, a state of reception of the photoelectric signal by the receiving device changes and the receiving device emits the in-place signal.

3. The winding and unwinding system according to claim 2, wherein the light-emitting device and the receiving device are fixed and are disposed opposite each other, the winding roller located at the set position is mounted with a light-blocking member, and the light-blocking member is able to rotate with the winding roller to a position between the light-emitting device and the receiving device and block the photoelectric signal.

4. The winding and unwinding system according to any one of claims 1 to 3, wherein the sensing device is a slot-type photoelectric switch or a through-beam photoelectric switch.

5. The winding and unwinding system according to any one of claims 1 to 4, further comprising a traction mechanism, wherein the traction mechanism is located upstream of the winding roller in a conveying direction of the strip material to pull the strip material and convey it to the winding roller located at the set position.

6. The winding and unwinding system according to claim 5, wherein the traction mechanism comprises a traction motor, a driving traction roller, and a driven traction roller, the driving traction roller is drivingly connected to the traction motor, and the strip material passes between the driving traction roller and the driven traction roller; and
the measuring device is configured to determine the traveling length of the strip material by measuring a rotation angle or a rotation displacement of the driving traction roller or the driven traction roller.

7. The winding and unwinding system according to claim 6, wherein the measuring device is a meter wheel, and the meter wheel is in contact with a surface of the driving traction roller or the driven traction roller.

8. The winding and unwinding system according to any one of claims 1 to 7, further comprising a driving device and a roll-changing pressing roller drivingly connected to the driving device, wherein
the driving device is connected to the controller;
the controller is configured to send a roll-pressing signal to the driving device when the winding radius reaches the preset threshold; and
the driving device is configured to, upon receiving the roll-pressing signal, drive the roll-changing pressing roller to move close to the set position, so that the roll-changing pressing roller gets in contact with the strip material.

9. The winding and unwinding system according to claim 8, wherein the driving device comprises an oscillating arm and a servo motor, one end of the oscillating arm is connected to the roll-changing pressing roller, and another end of the oscillating arm is drivingly connected to the servo motor, the servo motor being connected to the controller.

10. The winding and unwinding system according to any one of claims 1 to 9, further comprising an unwinding roller, wherein the unwinding roller is configured to unwind the strip material, and the unwinding roller is located upstream of the winding roller in the conveying direction of the strip material.

11. A preparation device for a battery electrode sheet, comprising the winding and unwinding system according to any one of claims 1 to 10.

12. A winding and unwinding control method, applicable to the winding and unwinding system according to any one of claims 1 to 10, comprising:
obtaining an in-place signal;
determining, in response to receiving the in-place signal, a winding radius of the winding roller located at the set position based on the traveling length measured by the measuring device; and
sending a roll-changing signal to the roll-changing device when the winding radius reaches a preset threshold to control the roll-changing device to drive another winding roller to move to the set position and get in contact with the strip material, so that the strip material winds onto the another winding roller.

13. The winding and unwinding control method according to claim 12, wherein after the determining a winding radius of the winding roller located at the set position based on the traveling length measured by the measuring device, the control method further comprises:
sending a roll-pressing signal to the driving device when the winding radius reaches the preset threshold to control the driving device to drive the roll-changing pressing roller to move close to the set position, so that the roll-changing pressing roller gets in contact with the strip material.
